# EUROPÄISCHE PATENTSCHRIFT

(11) **EP 2 623 944 B1**
(45) Veröffentlichungstag und Bekanntmachung des Hinweises auf die Patenterteilung: **07.03.2018**
(21) Anmeldenummer: 13000113.4
(22) Anmeldetag: 10.01.2013
(51) Int. Cl.: G01F 23/284, G01S 13/08, G01S 13/88

(54) **Nach dem Radar-Prinzip arbeitendes Füllstandmesssystem**
Fill level measuring device operating according to the radar principle
Système de mesure du niveau de remplissage fonctionnant selon le principe de radar

(30) Priorität: 02.02.2012 DE 102012001911
(43) Veröffentlichungstag der Anmeldung: 07.08.2013
(73) Patentinhaber: Krohne Messtechnik GmbH, 47058 Duisburg (DE)
(72) Erfinder: Deilmann, Michael, 45257 Essen (DE); Gerding, Michael, 44805 Bochum (DE); Wegemann, Uwe, 47443 Moers (DE); Pohl, Nils, 44801 Bochum (DE)
(74) Vertreter: Gesthuysen Patent- und Rechtsanwälte

(56) Entgegenhaltungen:
- EP-A1- 0 945 714
- WO-A1-2009/131528
- WO-A1-2010/053439
- DE-A1- 10 149 851
- DE-B4- 19 782 057
- US-A1- 2008 155 064

## Beschreibung

Die Erfindung betrifft ein nach dem Radar-Prinzip arbeitendes Füllstandmesssystem zum Messen eines Füllstandes eines in einem Behälter befindlichen Mediums. Dabei sind beim Füllstandmesssystem eine Signalsendeeinrichtung zum Aussenden eines elektromagnetischen Signals, eine mindestens ein von der Signalsendeeinrichtung zu sendendes elektromagnetisches Signal erzeugende Elektronikeinrichtung, und ein druck- und/oder diffusionsdichtes Trennelement vorgesehen.

Derartige Füllstandmesssysteme werden häufig auch als Tank Level Probing Radar (TLPR) Systeme bezeichnet und werden zur Messung von Füllständen in Behältern wie beispielsweise Tanks oder Silos verwendet. Bei einem solchen Radarmessgerät wird ein Laufzeitverfahren angewendet, das die physikalische Gesetzmäßigkeit ausnutzt, dass die Laufstrecke des ausgesendeten elektromagnetischen Signals gleich dem Produkt aus Laufzeit und Ausbreitungsgeschwindigkeit ist. Im Falle einer Messung des Füllstands eines Mediums - beispielsweise einer Flüssigkeit oder eines Schüttguts - in einem Behälter entspricht die Laufstrecke dem doppelten Abstand zwischen einer das elektromagnetische Signal abstrahlenden und wieder empfangenden Antenne und der Oberfläche des Mediums. Das Nutzechosignal - also das an der Oberfläche des Mediums reflektierte Signal - und dessen Laufzeit werden anhand der sog. Echofunktion bzw. der digitalisierten Hüllkurve bestimmt. Die Hüllkurve repräsentiert die Amplituden der Echosignale als Funktion des Abstandes "Antenne - Oberfläche des Mediums". Der Füllstand lässt sich aus der Differenz zwischen dem bekannten Abstand der Antenne zum Boden des Behälters und dem durch die Messung bestimmten Abstand der Oberfläche des Mediums zur Antenne berechnen. Für das Senden und Empfangen der elektromagnetischen Signale, bei denen es sich zumeist um Mikrowellenstrahlung handelt, werden beispielsweise Antennen verwendet, deren Antennenhohlraum wenigstens teilweise mit einem dielektrischen Einsatz ausgefüllt ist (siehe z. B. die DE 10 2008 020 036 A1).

Je nach der Art des Mediums, dessen Füllstand zu messen ist, oder nach der Art der Umgebungsbedingungen sind Füllstandmessgeräte ggf. extremen Belastungen ausgesetzt (z. B. hohe Temperaturen oder hohe Drücke). Weiterhin kann es erforderlich sein, dass die Schnittstelle zwischen dem Behälter und dem Messgerät aufgrund des Explosionsschutzes druck- und diffusionsdicht ausgestaltet werden muss. Daher wird im Stand der Technik zumindest die Elektronik, die z. B. die zu sendenden Signale erzeugt oder die die detektierten Signale auswertet, vom eigentlichen Prozess abgesetzt. Ein Teil des Messgerätes, insbesondere die Antenne verbleibt innerhalb des Behälters. Das von der Elektronik erzeugte Sendesignal wird dann zumeist über einen Hohlleiter als Signalführer zur Antenne übertragen.

Um auch die erforderliche Trennung zwischen Innen- und Außenraum des Behälters zu erreichen, wird beispielsweise ein hermetisch dichtes Trennelements in den Hohleiter eingebracht (siehe z. B. die DE 20 2009 009 102 U1). Ein solches Trennelement kann beispielsweise durch die Verwendung eines Metaglases erzeugt werden. Dabei handelt es sich um eine Glasscheibe, die druck- und diffusionsdicht in einen Metallflansch eingebracht ist. Das Trennelement befindet sich dabei zumeist im Inneren des Hohlleiters und erfüllt hier zumindest zwei Aufgaben: zum einen wird so ein druck- und diffusionsdichter Abschluss des Behälters erzeugt, zum anderen ergibt sich eine Zonentrennung zwischen der Explosionsschutzzone innerhalb und außerhalb des Behälters. Ähnliches gilt für leitungsgebundene Füllstandmesssysteme, die unter "Time Domain Reflectometry" (TDR) bekannt sind.

Nachteilig bei Hohlleitern ist insbesondere bei höheren Frequenzen (z. B. größer 60 GHz) des Radarsignals, dass aufgrund der kleinen Wellenlänge der über den Hohlleiter zu übertragenden Signale der Durchmesser des verwendeten Hohlleiters klein auszugestalten ist. Dadurch wirken sich jedoch mechanische Toleranzen (besonders des Durchmessers, der Spaltmaße oder der Hohlleiterübergänge) stark aus, so dass insbesondere Lösungen unter Verwendung von Metagläsern und den damit einhergehenden konstruktiven Übergängen verstärkt zu einer schlechten Signalqualität führen. Weiterhin ist es bei hohen Frequenzen aus Fertigungsgründen nicht möglich, Kegelstrukturen zu realisieren, die eine Impedanzanpassung für das hochfrequente Signal darstellen, wie es z. B. bei niederfrequenten Radarsystemen üblich ist. Ein zusätzliches Problem besteht im frequenzabhängigen Einfluss der Länge des Hohlleiters auf die Laufzeiten, was zu Dispersion des Signals führt. Das Problem wird insbesondere relevant, wenn hohe Bandbreiten (größer als 2 GHz) benutzt werden. Schließlich erweist es sich bei hochfrequenten Signalen als kaum möglich, die Signale von einem das Signal erzeugenden Chip in Form von Leitungsstrukturen außerhalb des Chips zu führen. Daher kann es erforderlich sein, eine Integration der Signalsendeeinrichtung, d. h. der Antenne auf dem Chip vorzunehmen.

Die Trennung der Elektronik eines Messgerätes in eine der eigentlichen Messung dienenden Komponente und eine Komponente, die der Auswertung des Messsignals dient, ist beispielsweise beschrieben in der DE 10 2009 049 676 A1, die eine Füllstandmessung in einem Kraftfahrzeugtank mittels Druckmessung beschreibt. Zwischen den Sensorkomponenten im Tank und der außerhalb davon befindlichen Auswertekomponente besteht dabei eine drahtlose Verbindung.

Die US 2004/0100281 A1 beschreibt ein Beispiel für ein Radar-Füllstandmessgerät mit einer galvanischen Trennung zwischen in Hinblick auf den Explosionsschutz unterschiedlichen Räumen. Ein weiteres Füllstandsmessgerät ist aus WO 2009/131528 bekannt.

Der Erfindung liegt daher die Aufgabe zugrunde, ein nach dem Radar-Prinzip arbeitendes und mit einem druck- und/oder diffusionsdichten Trennelement versehenes Füllstandmesssystem anzugeben, das die Verwendung von höherfrequenten Signalen erlaubt. Die Aufgabe wird durch die Merkmale von Anspruch 1 gelöst.

Das erfindungsgemäße Füllstandmesssystem, bei dem die zuvor hergeleitete und aufgezeigte Aufgabe gelöst ist, ist zunächst und im Wesentlichen dadurch gekennzeichnet, dass die Elektronikeinrichtung mehrteilig ausgestaltet ist. Mindestens eine Komponente der mehrteiligen Elektronikeinrichtung ist als Signalerzeugungskomponente zur Erzeugung des zu sendenden elektromagnetischen Signals ausgestaltet. Weiterhin sind die Signalerzeugungskomponente und mindestens eine andere Komponente der Elektronikeinrichtung als voneinander räumlich getrennte, eigenständige Einheiten ausgestaltet, und eine Kommunikationseinrichtung ist zwischen der Signalerzeugungskomponente und der mindestens einen anderen Komponente angeordnet, so dass jedenfalls eine Signalverbindung zwischen der Signalerzeugungskomponente und der anderen Komponente der Elektronikeinrichtung realisiert ist. Weiterhin ist zwischen der anderen Komponente und der Signalsendeeinrichtung das druck- und/oder diffusionsdichte Trennelement angeordnet. Die Elektronikeinrichtung wird konzeptionell in mindestens zwei Komponenten getrennt. Eine Komponente ist insbesondere die Komponente, die der Signalerzeugung dient und die der Signalsendeeinrichtung zuzuordnen ist. Zudem gibt es noch mindestens eine andere Komponente. Im Stand der Technik sind die Signalerzeugungskomponente und die andere Komponente zumeist in einer Einheit gebündelt. Die räumliche Trennung im hier beschriebenen erfindungsgemäßen Füllstandmesssystem zwischen den mindestens zwei voneinander abgesetzten Komponenten der Elektronikeinrichtung erlaubt es auch, dass eine Komponente innerhalb des Behälters und mindestens eine andere Komponente außerhalb des Behälters angeordnet ist. Dadurch können die Komponenten der Elektronikeinrichtung unterschiedlichen Bedingungen unterliegen, z. B. in Bezug auf den Explosionsschutz, und sie können daher auch unterschiedlich ausgestaltet werden. Die Kommunikationseinrichtung und das diffusions- und/oder druckdichte Trennelement sind derart aufeinander abgestimmt, dass das diffusions- und/oder druckdichte Trennelement nicht die durch die Kommunikationseinrichtung hergestellte Signalverbindung zwischen der Elektronikeinrichtung bzw. der Signalerzeugungskomponente der Elektronikeinrichtung und der Signalsendeeinrichtung behindert. Das druck- und/oder diffusionsdichte Trennelement ist in einer Variante zumindest teilweise in Art einer galvanischen Trennung ausgestaltet.

Die Erfindung sieht vor, dass die andere Komponente der Elektronikeinrichtung solche Signale erzeugt - die dann über die Kommunikationseinrichtung und/oder über das druck- und/oder diffusionsdichte Trennelement übertragen werden -, deren Frequenzabstand zur Frequenz des von der Signalerzeugungskomponente zu erzeugenden elektromagnetischen Signals hinreichend groß ist, um einen einfachen Entwurf und einen störungsfreien Betrieb zu ermöglichen. Wenn die Kommunikationseinrichtung beispielsweise eine Glasfaser ist, können die Frequenzen der von der anderen Komponente der Elektronikeinrichtung erzeugten Signale größer sein als die Frequenz des von der Signalerzeugungskomponente zu erzeugenden elektromagnetischen Signals. In anderen Fällen ist es unproblematischer, wenn die Frequenzen der von der Komponente der Elektronikeinrichtung erzeugten Signale kleiner als die Frequenz des von der Signalerzeugungskomponente zu erzeugenden elektromagnetischen Signals ist. Gemäß der letztgenannten Ausgestaltung werden Signale innerhalb der Elektronikeinrichtung übertragen, die jedenfalls niederfrequenter und damit einfacher handhabbar sind als die von der Elektronikeinrichtung bzw. von der Signalerzeugungskomponente der Elektronikeinrichtung erzeugten und über die Signalsendeeinrichtung abgestrahlten elektromagnetischen Signale. Damit können auf elegante Weise die Nachteile und Probleme vermieden werden, die sich bei auf dem Radar-Prinzip beruhenden Füllstandmesssystemen bei hohen Frequenzen ergeben, beispielsweise bei Frequenzen größer 60 GHz.

In einer vorteilhaften Ausgestaltung sind die Signalerzeugungskomponente und die Signalsendeeinrichtung als eine zusammenhängende Einheit ausgestaltet. Hierbei handelt es sich um eine oben angesprochene Integration von Signalerzeugungskomponente, bei der es sich beispielhaft um einen Chip handelt, und der Signalsendeeinrichtung, bei der es sich insbesondere um eine Antenne handelt. Eine solche Integration ist vor allem deshalb möglich, weil die Signalerzeugungskomponente separat von den anderen Elektronikbestandteilen ist und weil sie dadurch auch kleiner bzw. kompakt für die direkte Anbringung an die Antenne ausgestaltet werden kann. Das druck- und/oder diffusionsdichte Trennelement ist als ein Bestandteil der Kommunikationseinrichtung ausgestaltet. Da über die Kommunikationseinrichtung keine Übertragung von solchen Signalen erfolgen muss, die eine Frequenz in Höhe der Frequenz des von der Signalerzeugungskomponente erzeugten elektromagnetischen Signals aufweisen, ist es auch möglich, das Trennelement, das im Stand der Technik eine Impedanzanpassung erforderlich macht, in die Kommunikationseinrichtung einzufügen, ohne dass die Probleme des Standes der Technik auftreten.

Die folgenden Ausgestaltungen beziehen sich auf die Kommunikationseinrichtung. Dabei ist die Kommunikationseinrichtung gemäß einer Ausgestaltung teilweise oder vollständig ein Kabel. Alternativ oder ergänzend ist sie zumindest teilweise als Hohlleiter oder zumindest teilweise für eine optische Signalübertragung ausgestaltet. Ein Kabel ist dabei nach allgemeinem Verständnis ein mit Isolierstoffen ummantelter ein- oder mehradriger Verbund von Drähten, der der Leitung von elektrischer Energie oder elektrischer Signale dient. Die Kommunikationseinrichtung dient dabei beispielsweise zum Übertragen von Daten und/oder von elektromagnetischen Signalen und/oder von elektrischer Energie.

Die folgenden Ausgestaltungen sind der anderen Komponente der Elektronikeinrichtung gewidmet, die von der Signalerzeugungskomponente abgesetzt ist. Die andere Komponente ist dabei in einer Ausgestaltung für die Energieversorgung der Signalerzeugungskomponente und/oder für die Steuerung der Signalerzeugungskomponente und/oder für die Auswertung eines von einer Signalempfangseinrichtung empfangenen elektromagnetischen Signals bzw. eines davon abgeleiteten Signals ausgebildet. In einer zusätzlichen, ebenfalls alternativen oder ergänzenden Ausgestaltung dient die andere Komponente der Umwandlung eines von der Signalerzeugungskomponente erzeugten Signals oder einer Information. In letztem Fall kann die andere Komponente auch als Konverter oder Übertrager bezeichnet werden und beispielsweise auch dem Anschluss an einen Datenbus dienen.

In einer Ausgestaltung weist die Signalerzeugungskomponente mindestens eine erste Teilkomponente und eine zweite Teilkomponente auf. Zwischen den zwei Teilkomponenten befindet sich das druck- und/oder diffusionsdichte Trennelement. Mit dieser Ausgestaltung ist in einer Variante verbunden, dass die erste Teilkomponente ein niederfrequentes Signal erzeugt, das über das Trennelement übertragen wird und aus dem die zweite Teilkomponente das auszusendende hochfrequente Signal generiert.

In einer Ausgestaltung ist in einer Variante eine Art Multiplexen dergestalt vorgesehen, dass mindestens zwei Signalsendeeinrichtungen - d. h. beispielweise zwei Antennen - vorgesehen sind, die beide das von der Signalerzeugungskomponente erzeugte elektromagnetische Signal und/oder ein davon abhängiges elektromagnetisches Signal aussenden. Über die Verwendung mehrere Antennen lassen sich beispielsweise Informationen über Oberflächenprofile des Mediums gewinnen. Die Signalsendeeinrichtungen senden dabei in einer Ausgestaltung beide ein Signal aus. In einer alternativen Variante sendet eine Signalsendeeinrichtung ein moduliertes Signal aus.

In einer Variante ist die Signalerzeugungskomponente für eine Anwendung in einem explosionsgefährdeten Bereich ausgestaltet. Diese Ausgestaltung erlaubt damit auch das Einbringen der Signalerzeugungsquelle in den Behälter, in dem sich das Medium und die Signalsendeeinrichtung befinden.

In einer Ausgestaltung ist die Signalsendeeinrichtung als Antenne zum Senden und Empfangen von elektromagnetischen Signalen ausgestaltet. Alternativ sind zum Senden und Empfangen der Signale zwei unterschiedliche Einheiten, z. B. zwei Antennen vorgesehen.

Im Einzelnen gibt es eine Vielzahl von Möglichkeiten, das erfindungsgemäße Füllstandmesssystem auszugestalten und weiterzubilden. Dazu wird verwiesen auf die dem Patentanspruch 1 nachgeordneten Patentansprüche, andererseits auf die folgende Beschreibung von Ausführungsbeispielen in Verbindung mit der Zeichnung. In der Zeichnung zeigen
- Fig.1: eine schematische, im Wesentlichen die funktionalen Wirkzusammenhänge anhand eines Blockschaltbilds verdeutlichende Darstellung einer Messanordnung bei einem Behälter mit einem Füllstandmesssystem gemäß dem Stand der Technik,
- Fig. 2: eine schematische, im Wesentlichen die funktionalen Wirkzusammenhänge anhand eines Blockschaltbilds verdeutlichende Darstellung einer Messanordnung bei einem Behälter mit einem erfindungsgemäßen Füllstandmesssystem gemäß einer ersten Variante,
- Fig. 3: eine schematische, im Wesentlichen die funktionalen Wirkzusammenhänge anhand eines Blockschaltbilds verdeutlichende Darstellung einer Messanordnung bei einem Behälter mit einem erfindungsgemäßen Füllstandmesssystem gemäß einer zweiten Variante und
- Fig. 4: eine schematische, im Wesentlichen die funktionalen Wirkzusammenhänge anhand eines Blockschaltbilds verdeutlichende Darstellung einer Messanordnung bei einem Behälter mit einem erfindungsgemäßen Füllstandmesssystem gemäß einer dritten Variante.

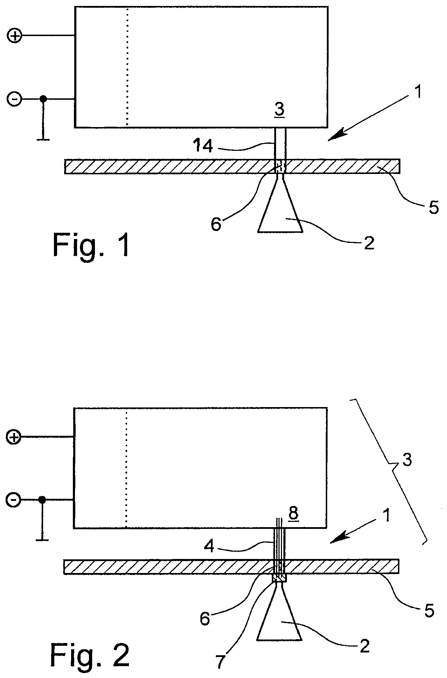

In der Fig. 1 ist eine Messanordnung gemäß dem Stand der Technik dargestellt. In den Fig. 2 bis 4 sind jeweils verschiedene Ausführungsbeispiele einer Messanordnung mit einem erfindungsgemäßen Füllstandmesssystem 1 dargestellt, wobei die Figuren lediglich die Wirkzusammenhänge zwischen den verschiedenen Bestandteilen erkennbar werden lassen sollen.

Die Fig. 1 zeigt im Blockschaltbild eine schematische Messung eines - nicht dargestellten - Mediums in einem angedeuteten Behälter gemäß dem Stand der Technik. Das dargestellte Füllstandmesssystem 1 wird dabei im Wesentlichen von einem Feldgerät gebildet, dessen Signalsendeeinrichtung 2 hier beispielhaft als Hornantenne ausgestaltet ist. Von der Signalsendeeinrichtung 2 wird bei einer Messung des Füllstands ein Mikrowellensignal in Richtung der Oberfläche des - nicht dargestellten - Mediums dargestellt und nach der Reflexion an der Oberfläche - dann in der Funktion einer Signalempfangseinrichtung - wieder detektiert. Aus der Laufzeit lässt sich die Füllhöhe berechnen. Die zugeordnete Elektronikeinheit 3, die der Erzeugung des Mikrowellensignals und auch der Auswertung des empfangenen Signals dient, ist in der hier gezeigten Ausgestaltung des Standes der Technik außerhalb des angedeuteten Behälters angebracht. Das von der Elektronikeinheit 3 erzeugte Mikrowellensignal wird für die Messung des Füllstands über einen Hohlleiter 14 durch eine Aussparung in der Wandung 5 des Behälters auf die Signalsendeeinrichtung 2 übertragen. Der Hohlleiter 14, weist zur Trennung zwischen dem Innenraum des Behälters und dem Raum außerhalb des Behälter ein Trennelement 6 auf. Mit zunehmender Frequenz des auszusendenden Mikrowellensignals sind solche Hohlleiter 14 und insbesondere solche Trennelemente 6 mit Nachteilen behaftet, wie sie oben diskutiert worden sind. Solche Trennelemente 6 sind jedoch in Abhängigkeit von der Anwendung des Füllstandmesssystems 1 manchmal zwingend erforderlich, um einen Schutz des Innenraums des Behälters z. B. vor einer Explosionsgefahr oder um einen Schutz des Außenraums vor dem Medium zu gewährleisten.

Die Fig. 2 zeigt ein erfindungsgemäßes Messsystem 1, bei dem die Elektronikeinrichtung 3 aus - in der hier als Beispiel gezeigten Ausgestaltung - zwei Komponenten 7, 8 besteht. Gleiche Elemente wie in der Fig. 1 wurden für die Übersichtlichkeit mit gleichen Bezugszeichen versehen. Eine Komponente - die Signalerzeugungskomponente 7 befindet sich innerhalb des - hier ebenfalls wie in der Fig. 1 durch die Wandung 5 angedeuteten - Behälters und damit beispielsweise auch in einer explosionsgefährdeten Umgebung (z. B. Zone 0). Die andere Komponente 8, die insbesondere selbst wiederum in mehrere Einzelkomponenten zerfallen kann, befindet sich außerhalb des Behälters und ist dadurch auch nicht den Prozessbedingungen und den dort geltenden Schutzbedingungen ausgesetzt. Die Aufteilung in zwei Komponenten 7, 8 bringt es mit sich, das aufgrund der unterschiedlichen Umgebungsbedingungen die Komponenten 7, 8 unterschiedlich ausgestaltet werden können. Ist es beispielsweise erforderlich, dass die Signalerzeugungskomponente 7 explosionsgeschützt ausgeführt wird, so ist dies für die andere Komponente 8 aufgrund der durch die Trennung der Elektronikeinheit 3 in mehrere räumlich getrennte Komponenten ermöglichte Anordnung außerhalb des Behälters nicht oder jedenfalls nur in geringerem Maße erforderlich. Daher wäre es für den beispielhaften Fall des Explosionsschutzes auch möglich, die andere Komponente 8 mit mehr Energie als die Signalerzeugungskomponente 7 zu versorgen.

Die Aufgabe der Signalerzeugungskomponente 7 besteht zumindest darin, das elektromagnetische (insbesondere Mikrowellen-) Signal zu erzeugen, das die Signalsendeeinrichtung 2, die hier als dielektrische Antenne ausgestaltet ist, in Richtung des - hier nicht dargestellten - Mediums abstrahlt. Dafür ist vorzugsweise die Signalerzeugungskomponente 7 möglichst nahe an der Signalsendeeinrichtung 2 angebracht. In einer vorteilhaften Ausgestaltung sind insbesondere die Signalerzeugungskomponente 7 und die Signalsendeeinrichtung 2 einteilig ausgestaltet, indem die Signalerzeugungskomponente 7 direkt auf der Signalsendeeinrichtung 2 aufgebracht ist. Zwischen der Signalerzeugungskomponente 7 und der anderen Komponente 8 ist eine Kommunikationseinrichtung 4 vorgesehen, die in dem dargestellten Ausführungsbeispiel über in ein Metaglas eingeschmolzene Stifte - dieser Übergang dient dann insbesondere auch als Trennelement 6 - zur Kontaktierung verfügt. Über die Kommunikationseinrichtung 4 wird dabei beispielsweise die Energieversorgung oder die Steuerung der Signalerzeugungskomponente 7 realisiert. Dementsprechend ist die andere Komponente 8 ausgestaltet und verfügt über passende Funktionalitäten zur Energieübertragung bzw. Ansteuerung der Signalerzeugungskomponente 7. Bei einer anderen, hier nicht dargestellten Ausführungsform werden Signale und/oder Energie zur Versorgung der Signalerzeugungskomponente transformatorisch übertragen. Da die Signalerzeugungskomponente 7 auf der Seite der Signalsendeeinrichtung 2 angeordnet ist, müssen von der anderen Komponente 8 aus über die Kommunikationseinrichtung 4 keine hochfrequenten Sendesignale übertragen werden. Damit entfallen auch die Nachteile des Standes der Technik. Zwischen der Signalerzeugungskomponente 7 und der anderen Komponente 8 und dadurch auch zwischen der Signalsendeeinrichtung 2 und der anderen Komponente 8 befindet sich als Teil der Kommunikationseinrichtung 4 das Trennelement 6, das vorzugsweise druck- und diffusionsdicht ausgestaltet ist und das der Trennung zwischen dem Prozessraum, d. h. dem Innenraum des angedeuteten Behälters und dem Außenraum bzw. zwischen der Signalerzeugungskomponente 7 und der anderen Komponente 8 dient.

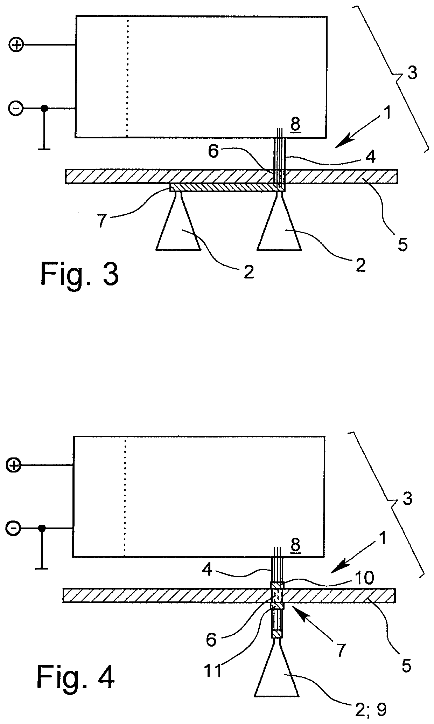

In der Ausgestaltung des erfindungsgemäßen Füllstandmesssystems 1 der Fig. 3 sind zwei Signalsendeeinrichtungen 2 in Form von Antennen vorgesehen, die an unterschiedlichen Orten innerhalb des - durch die Wandung 5 angedeuteten - Behälters angebracht sind und beispielsweise die Vermessung von unterschiedlichen Abschnitten des - hier nicht dargestellten - Mediums erlauben. Beispielsweise kann dadurch ein Oberflächenverlauf des Mediums, bei dem es sich beispielsweise um ein Schüttgut handelt, gemessen werden, um z. B. zu einer Schüttgutkegelcharakterisierung zu gelangen. Die im Behälter befindliche Signalerzeugungskomponente 7 ist für diese Ausgestaltung mit beiden Signalsendeeinrichtungen 2 verbunden. In einer alternativen Ausgestaltung sind zwei Signalerzeugungskomponenten 7 vorgesehen, die jeweils mit einer Signalsendeeinrichtung 2 verbunden sind. Über die Vielzahl an Signalsendeeinrichtungen 2 kann beispielsweise auch eine Selbstdiagnose des Füllstandmesssystem 1 vorgenommen werden, in der beispielsweise die Verschmutzung einer Antenne 2 erkannt wird. Alternativ werden von den Signalsendeeinrichtungen 2, von denen auch mehr als zwei vorhanden sein können, Signale aus unterschiedlichen Frequenzbereichen (z. B. eine Kombination von einem 10 GHz-Signal mit einem 24 GHz-Signal oder einem 80 GHz-Signal) abgestrahlt. In einer zusätzlichen ergänzenden oder alternativen Variante sind die Signalsendeeinrichtungen 2 unterschiedlich ausgestaltet, so dass es sich beispielsweise um eine Kombination von einer Hornantenne mit einem Stab oder Seil wie bei einem geführten Radar (TDR) handelt.

In der Ausgestaltung der Fig. 4 ist die Signalsendeeinrichtung 2 auch als Signalempfangseinrichtung 9 vorgesehen. Dies ist prinzipiell auch bei den anderen erfindungsgemäßen Ausgestaltungen der Fig. 2 und 3 möglich. Das empfangene Signal kann dabei ebenfalls von der Signalerzeugungskomponente 7, die in dieser Variante zu einer Signalerzeugungs-/Signalempfangskomponente wird, verarbeitet, z. B. ausgewertet oder in der Frequenz transformiert werden. In der hier gezeigten Ausgestaltung besteht die Signalerzeugungskomponente 7 aus einer ersten Teilkomponente 10 und einer zweiten Teilkomponente 11, zwischen denen sich das Trennelement 6 passend auf der Höhe der Wandung 5 des - hier angedeuteten - Behälters als Abschluss zwischen dem Innenraum und dem Außenraum des Behälters als druck- und vorzugsweise auch diffusionsdichte Trennung befindet. Dabei ist die erste Teilkomponente 10 außerhalb und die zweite Teilkomponente 11 innerhalb des Behälters angeordnet. Dabei kann es sich beispielsweise um zwei Bereiche einer integrierten Schaltung oder eines Chips handeln. Die Kommunikationseinrichtung 4 verläuft zwischen der anderen Komponente 8 und der Signalerzeugungskomponente 7. In der in der Fig. 4 gezeigten Variante des Füllstandmesssystems 1 ist eine weitere Verbindung zwischen der zweiten Teilkomponente 11 der Signalerzeugungskomponente 7 und der Signalsendeeinrichtung 2 bzw. der Signalempfangseinrichtung 9 vorgesehen.

Das erfindungsgemäße Füllstandmesssystem 1 wurde in den obigen Beispielen anhand von Antennen, wie sie insbesondere für hochfrequente Radarsysteme (Frequenz größer als 60 GHz) Verwendung finden, verdeutlicht. Gleichwohl ist es jedoch beispielsweise auch für die Anwendung mit Signalen niedrigerer Frequenz, bei TDR-Radarsystemen (Stichwort: Kabelradar) oder bei optischen Messsystemen geeignet. Die Erzeugung des eigentlichen Messsignals findet jeweils direkt im Behälter statt.

## Patentansprüche

1. Nach dem Radar-Prinzip arbeitendes Füllstandmesssystem (1) zum Messen eines Füllstandes eines in einem Behälter befindlichen Mediums, wobei mindestens eine Signalsendeeinrichtung (2) zum Aussenden eines elektromagnetischen Signals vorgesehen ist, wobei mindestens eine mindestens ein von der Signalsendeeinrichtung (2) zu sendendes elektromagnetisches Signal erzeugende Elektronikeinrichtung (3) vorgesehen ist, wobei mindestens ein druck- und/oder diffusionsdichtes Trennelement (6) vorgesehen ist, wobei die Elektronikeinrichtung (3) mehrteilig ausgestaltet ist, wobei mindestens eine Komponente der mehrteiligen Elektronikeinrichtung (3) als Signalerzeugungskomponente (7) zur Erzeugung des zu sendenden elektromagnetischen Signals ausgestaltet ist, wobei die Signalerzeugungskomponente (7) und mindestens eine andere Komponente (8) der Elektronikeinrichtung (3) als voneinander räumlich getrennte, eigenständige Einheiten ausgestaltet sind, wobei eine Kommunikationseinrichtung (4) zwischen der Signalerzeugungskomponente (7) und der mindestens einen anderen Komponente (8) angeordnet ist, und wobei zwischen der anderen Komponente (8) und der Signalsendeeinrichtung (2) das druck- und/oder diffusionsdichte Trennelement (6) angeordnet ist,
**dadurch gekennzeichnet,**
**dass** das druck- und/oder diffusionsdichte Trennelement (6) als ein Bestandteil der Kommunikationseinrichtung (4) ausgestaltet ist und dass die andere Komponente (8) so ausgestaltet ist, dass sie nur solche Signale erzeugt und über die Kommunikationseinrichtung (4) zu der Signalerzeugungskomponente (7) überträgt, deren Frequenz kleiner ist als die Frequenz des von der Signalerzeugungskomponente (7) zu erzeugenden elektromagnetischen Signals.

2. Füllstandmesssystem (1) nach Anspruch 1, **dadurch gekennzeichnet, dass** die Signalerzeugungskomponente (7) und die Signalsendeeinrichtung (2) als eine zusammenhängende Einheit ausgestaltet sind.

3. Füllstandmesssystem (1) nach Anspruch 1 oder 2, **dadurch gekennzeichnet, dass** die Kommunikationseinrichtung (4) über in ein Metaglas eingeschmolzene Stifte verfügt.

4. Füllstandmesssystem (1) nach einem der Ansprüche 1 bis 3, **dadurch gekennzeichnet, dass** die andere Komponente (8) zur Energieversorgung und/oder zur Steuerung der Signalerzeugungskomponente (7) ausgestaltet ist.

5. Füllstandmesssystem (1) nach einem der Ansprüche 1 bis 4, **dadurch gekennzeichnet, dass** mindestens zwei Signalsendeeinrichtungen (2) vorgesehen sind, und dass die mindestens zwei Signalsendeeinrichtungen (2) das von der Signalerzeugungskomponente (7) erzeugte elektromagnetische Signal und/oder ein davon abhängiges elektromagnetisches Signal aussenden.

6. Füllstandmesssystem (1) nach einem der Ansprüche 1 bis 5, **dadurch gekennzeichnet, dass** die Signalsendeeinrichtung (2) als Antenne zum Senden und Empfangen von elektromagnetischen Signalen ausgestaltet ist.

## Claims

1. Level measuring system (1) which operates according to the radar principle for measuring a level of a medium which is located in a vessel, wherein at least one signal transmission apparatus (2) for transmission of an electromagnetic signal is provided, wherein at least one electronic apparatus (3) is provided for generating at least one electromagnetic signal to be transmitted by the transmission apparatus (2), wherein at least one pressure-tight and/or diffusion-tight separating element (6) is provided, wherein the electronic apparatus (3) is designed of multiple parts, wherein at least one component of the multi-part electronic apparatus (3) is a signal generating component (7) for generating the electromagnetic signal to be transmitted, wherein the signal generating component (7) and at least one other component (8) of the electronic apparatus (3) are designed as spatially-separated, independent units, wherein a communications apparatus (4) is located between the signal generating component (7) and the at least one other component (8), and wherein the pressure-tight and/or diffusion-tight separating element (6) is located between the other component (8) and the signal transmission apparatus (2),
**characterized in**
**that** the pressure-tight and/or diffusion-tight separating element (6) is designed as a component of the communications apparatus (4) and that the other component (8) is designed such that it generates and transmits - to the signal generating component (7) via the communications apparatus (4) - only such signals that have a frequency less than the frequency of the electromagnetic signals to be generated by the signal generating component (7).

2. Level measuring system (1) according to claim 1, **characterized in that** the signal generating component(7) and the signal transmission apparatus (2) are designed as a coherent unit.

3. Level measuring system (1) according to claim 1 or 2, **characterized in that** the communications apparatus (4) comprises pins melted into a meta-glass

4. Level measuring system (1) according to any one of claims 1 to 3, **characterized in that** the other component (8) is designed for power supply and/or for control of the signal generating component (7).

5. Level measuring system (1) according to any one of claims 1 to 4, **characterized in that** at least two signal transmission apparatuses (2) are provided, and that the at least two signal transmission apparatuses (2) transmit the electromagnetic signal generated by the signal generating component (7) and/or an electromagnetic signal dependent thereupon.

6. Level measuring system (1) according to any one of claims 1 to 5, **characterized in that** the signal transmission apparatus (2) is designed as an antenna for transmitting and receiving electromagnetic signals.

## Revendications

1. Système de mesure de niveau de remplissage (1) fonctionnant selon le principe du radar et destiné à mesurer un niveau d'un fluide qui se trouve dans un réservoir, au moins un dispositif d'émission de signal (2) destiné à émettre un signal électromagnétique étant présent, au moins un dispositif électronique (3) qui génère au moins un signal électromagnétique à émettre par le dispositif d'émission de signal (2) étant présent, au moins un élément de séparation (6) étanche à la pression et/ou à la diffusion étant présent, le dispositif électronique (3) étant configuré en plusieurs parties, au moins un composant du dispositif électronique (3) en plusieurs parties étant configuré sous la forme d'un composant de génération de signal (7) destiné à générer le signal électromagnétique à émettre, le composant de génération de signal (7) et au moins un autre composant (8) du dispositif électronique (3) étant configurés sous la forme d'unités autonomes, mutuellement séparées dans l'espace, un dispositif de communication (4) étant disposé entre le composant de génération de signal (7) et l'au moins un autre composant (8), et l'élément de séparation (6) étanche à la pression et/ou à la diffusion étant disposé entre l'autre composant (8) et le dispositif d'émission de signal (2),
**caractérisé en ce**
**que** l'élément de séparation (6) étanche à la pression et/ou à la diffusion est configuré sous la forme d'un élément constitutif du dispositif de communication (4) et **en ce que** l'autre composant (8) est configuré de telle sorte qu'il ne génère et ne transmet par le biais du dispositif de communication (4) vers le composant de génération de signal (7) que les signaux dont la fréquence est inférieure à la fréquence du signal électromagnétique à générer par le composant de génération de signal (7).

2. Système de mesure de niveau de remplissage (1) selon la revendication 1, **caractérisé en ce que** le composant de génération de signal (7) et le dispositif d'émission de signal (2) sont configurés sous la forme d'une unité cohérente.

3. Système de mesure de niveau de remplissage (1) selon la revendication 1 ou 2, **caractérisé en ce que** le dispositif de communication (4) dispose de broches fusionnées dans un Metaglas.

4. Système de mesure de niveau de remplissage (1) selon l'une des revendications 1 à 3, **caractérisé en ce que** l'autre composant (8) est configuré pour l'alimentation en énergie et/ou pour la commande du composant de génération de signal (7).

5. Système de mesure de niveau de remplissage (1) selon l'une des revendications 1 à 4, **caractérisé en ce qu'**il existe au moins deux dispositifs d'émission de signal (2), et **en ce que** les au moins deux dispositifs d'émission de signal (2) émettent le signal électromagnétique généré par le composant de génération de signal (7) et/ou un signal électromagnétique dépendant de celui-ci.

6. Système de mesure de niveau de remplissage (1) selon l'une des revendications 1 à 5, **caractérisé en ce que** le dispositif d'émission de signal (2) est configuré sous la forme d'une antenne servant à l'émission et à la réception de signaux électromagnétiques.
